# FASCICULE DE BREVET EUROPEEN

(11) **EP 2 901 415 B1**
(45) Date de publication et mention de la délivrance du brevet: **06.12.2017**
(21) Numéro de dépôt: 13766324.1
(22) Date de dépôt: 24.09.2013
(51) Int. Cl.: G06T 7/00

(54) **PROCÉDÉ D'IDENTIFICATION DE CELLULES DANS UN TISSU BIOLOGIQUE**
VERFAHREN ZUR IDENTIFIZIERUNG VON ZELLEN IN EINEM BIOLOGISCHEN GEWEBE
METHOD FOR IDENTIFYING CELLS IN A BIOLOGICAL TISSUE

(30) Priorité: 25.09.2012 FR 1258976
(43) Date de publication de la demande: 05.08.2015
(73) Titulaire: Ecole Normale Supérieure de Lyon, 69342 Lyon Cedex 07 (FR); Hospices Civils de Lyon, 69229 Lyon Cedex 02 (FR); Université Lyon 1 Claude Bernard, 69100 Villeurbanne (FR); Centre National de la Recherche Scientifique, 75016 Paris (FR)
(72) Inventeur: RUDKIN, Brian, F-69009 Lyon (FR); CLUET, David, F-69100 Villeurbanne (FR); SPICHTY, Martin, F-69006 Lyon (FR)
(74) Mandataire: GIE Innovation Competence Group
(86) Numéro de dépôt international: PCT/EP2013/069882
(87) Numéro de publication internationale: WO 2014/048936

(56) Documents cités:
- KHARMA N ET AL: "Automatic segmentation of cells from microscopic imagery using ellipse detection", IET IMAGE PROCESS, vol. 1, no. 1, 6 mars 2007 (2007-03-06), pages 39-47, XP006028276,
- Larry Reinking: "Examples of Image Analysis Using ImageJ", , juin 2007 (2007-06), XP002694964, Extrait de l'Internet: URL:http://rsbweb.nih.gov/ij/docs/pdfs/exa mples.pdf [extrait le 2013-03-22]
- Gabriel Landini: "Auto Local Threshold", , 2 novembre 2011 (2011-11-02), XP002694965, Extrait de l'Internet: URL:http://fiji.sc/wiki/index.php/Auto_Loc al_Threshold [extrait le 2013-03-22]
- Johannes Schindelin: "Auto Crop", , 30 avril 2011 (2011-04-30), XP002694966, Extrait de l'Internet: URL:http://fiji.sc/wiki/index.php/Auto_Cro p [extrait le 2013-03-22]
- Anonymous: "Analyze", ImageJ User Guide IJ1.45 , 27 décembre 2011 (2011-12-27), pages 116-121, XP002694967, Extrait de l'Internet: URL:http://rsb.info.nih.gov/ij/docs/user-g uide-A4booklet.pdf [extrait le 2013-03-22]
- Anonymous: "Image - Threshold", ImageJ User Guide IJ1.45 , 27 décembre 2011 (2011-12-27), pages 68-71, XP002694968, Extrait de l'Internet: URL:http://rsb.info.nih.gov/ij/docs/user-g uide-A4booklet.pdf [extrait le 2013-03-22]
- BOUAYNAYA N ET AL: "Theoretical Foundations of Spatially-Variant Mathematical Morphology Part I: Binary Images", TRANSACTIONS ON PATTERN ANALYSIS AND MACHINE INTELLIGENCE, vol. 30, no. 5, 1 mai 2008 (2008-05-01), pages 823-836, XP011202116, IEEE, PISCATAWAY, USA ISSN: 0162-8828

## Description

L'invention concerne un procédé d'identification de cellules dans un tissu biologique. L'invention concerne également un procédé de recensement de cellules dans un tissu biologique. L'invention concerne aussi un support d'enregistrement d'informations comportant des instructions pour l'exécution de ces procédés. L'invention concerne enfin un calculateur électronique programmé pour exécuter ces procédés.

De façon connue, il existe des procédés pour identifier des cellules dans une image numérique d'un tissu biologique. Par exemple, le document US2006/0188140A1 décrit un tel procédé, dans lequel des cellules sont identifiées en détectant le contour de leur membrane. Ce procédé présente cependant de nombreux inconvénients. En particulier, ce procédé identifie difficilement des cellules dites pathologiques qui présentent des caractéristiques morphologiques atypiques. Ce procédé comprend, de plus, des étapes de calcul complexes et donc fortement coûteuses en ressources informatiques.

De l'état de la technique est également connu des documents suivants :
- Kharma N. et al, « Automatic segmentation of cells from microscopic imagery using ellipse detection », IET Image Process, vol. 1, n°1, p. 39-47, 6 mars 2007 ;
- Larry Reinking « Examples of Image Analysis Using ImageJ », extrait du site internet « http://rebweb.nih.gov/ij/docs/pdfs/examples.pdf », juin 2007 ;
- Gabriel Landini, « Auto Local Threshold », extrait du site internet « http://fiji.sc/wiki/index.php/Auto_Local Threshold », novembre 2011 ;
- Johannes Schindelin, « Auto Crop », « http://fiji.sc/wiki/index.php/Auto_Crop », avril 2011 ;
- « ImageJ user guide IJ1.45 », p. 116-121, décembre 2011 ;
- Bouaynaya N. et al., « Theoretical foundations of spatially-variant mathematical morphology Part I : Binary Images », IEEE Transactions on pattern analysis and machine intelligence, vol. 30, p. 823-836, mai 2008.

Il existe donc un intérêt pour un procédé d'identification de cellules dans un tissu biologique rapide et qui soit suffisamment robuste pour être capable de détecter, avec suffisamment de fiabilité, des cellules pathologiques.

L'invention propose donc un procédé d'identification de cellules dans un tissu biologique, chaque cellule incluant un cytoplasme délimité par une membrane cellulaire, ce procédé comprenant les étapes de la revendication 1.

Ainsi, les cellules sont identifiées en détectant leur cytoplasme. En détectant le cytoplasme des cellules plutôt que le contour de leur membrane, l'efficacité, la robustesse et la fiabilité du procédé d'identification sont accrues et son exécution est simplifiée.

Les modes de réalisation de l'invention peuvent comporter une ou plusieurs des caractéristiques des revendications dépendantes 2-7,11.

Ces modes de réalisation présentent en outre les avantages suivants :
- la comparaison des caractéristiques morphologiques permet d'éliminer rapidement les candidats cellules identifiés qui ne sont pas des cellules ;
- la partition de l'image brute en une pluralité de fenêtres d'analyse dans lesquelles sont définis des seuils respectifs permet d'accroître la robustesse du procédé vis à vis des variations locales de gammes d'intensité, par exemples dues à des variations locales de paramètres d'exposition ou de mise au point lors de l'acquisition de l'image brute ;
- l'utilisation de secondes fenêtres d'analyses distinctes des premières fenêtres d'analyse permet de détecter efficacement des cellules dont une partie de la membrane se trouve à cheval entre deux premières fenêtres d'analyse ;
- la génération d'une troisième image seuillée permet de détecter efficacement des cellules dans le cas où l'image présente une distribution anisotrope de gammes d'intensité ;
- la génération une quatrième image seuillée sur chacun des candidats cellules permet de détecter si le candidat cellule est un amas de plusieurs cellules ;
- la génération d'un ensemble de cellules corrigées permet d'obtenir, à partir des coordonnées du cytoplasme de chaque cellule, des coordonnées de la membrane cellulaire respective, avec un taux de réussite proche de celui obtenu lorsque l'image est analysée par un utilisateur humain.

L'invention porte également sur un procédé de recensement de cellules dans un tissu biologique conforme à la revendication 8.

Selon un autre aspect, l'invention porte sur un support d'enregistrement d'informations conforme à la revendication 9.

Selon un autre aspect, l'invention porte sur un calculateur électronique conforme à la revendication 10.

L'invention sera mieux comprise à la lecture de la description qui va suivre, donnée uniquement à titre d'exemple non limitatif et faite en se référant aux dessins sur lesquels :
- la figure 1 illustre schématiquement un dispositif de calcul ;
- la figure 2 est un organigramme d'un procédé d'identification et de recensement de cellules dans un tissu biologique, apte à être exécuté sur le dispositif de calcul de la figure 1 ;
- la figure 3 illustre schématiquement une image numérique d'une coupe d'un tissu biologique ;
- les figures 4 et 5, 7, 9, 11 et 13 sont des organigrammes d'étapes du procédé de la figure 2 ;
- les figures 6A, 8A et 10A illustrent schématiquement des images bilan produites par le procédé de la figure 2 et comprenant des candidats cellules identifiés par le procédé de la figure 2 ;
- les figures 6B, 8B et 10B illustrent des grossissements d'une portion, respectivement, des figures 6A, 8A et 10A, illustrant des candidats cellules identifiés par le procédé de la figure 2 ;
- la figure 12 illustre schématiquement une portion de l'image résultat générée, à partir de candidats cellules d'une portion de l'image seuillée de la figure 6B, par des étapes du procédé de la figure 2.

Dans ces figures, les mêmes références sont utilisées pour désigner les mêmes éléments.

Dans la suite de cette description, les caractéristiques et fonctions bien connues de l'homme du métier ne sont pas décrites en détail.

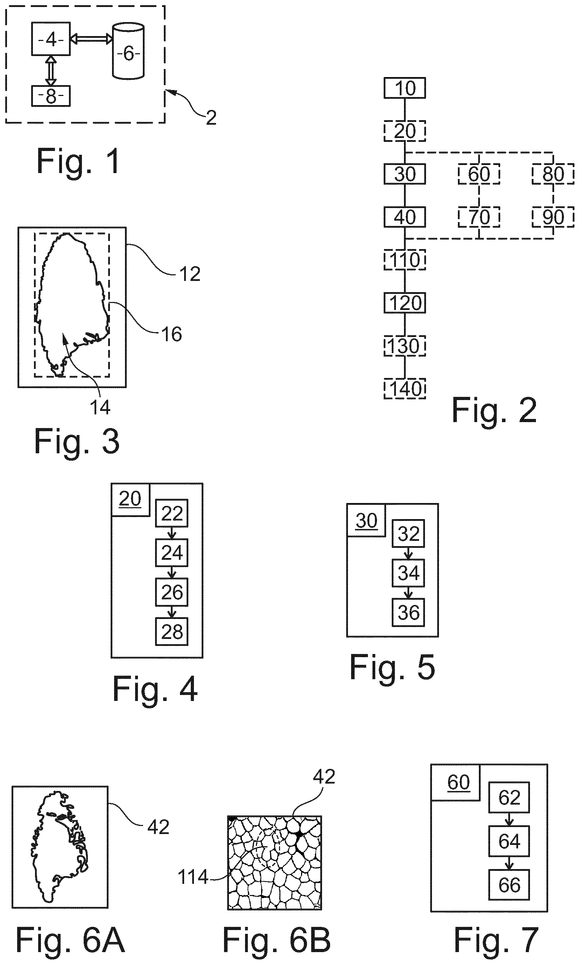

La figure 1 représente un dispositif de calcul 2, comprenant :
- un calculateur électronique 4 ;
- un support d'enregistrement d'informations 6 ;
- une interface d'échanges de données 8.

L'interface 8 permet l'acquisition d'images numériques par le calculateur 4. Ce calculateur 4 est notamment programmé pour exécuter des instructions contenues dans le support d'enregistrement 6. Le support d'enregistrement 6 comprend ici des instructions pour l'exécution du procédé de la figure 2.

Le fonctionnement du dispositif 2 va maintenant être décrit en référence aux étapes de la figure 2 et à l'aide de la figure 3.

Initialement, lors d'une étape 10, le calculateur 4 acquiert une image numérique brute 12 (figure 3) d'une coupe de tissu biologique 14 contenant les cellules à identifier.

L'image numérique brute 12 est un fichier informatique représentant une image matricielle comprenant une pluralité de pixels de valeurs d'intensités différentes. Ici, l'image brute 12 est enregistrée dans le format TIFF (« Tagged Image File Format » en langue anglaise) conforme à la spécification « TIFF 6.0 » publiée par la société « Adobe Systems ». L'image brute 12 est ici enregistrée en niveaux de gris avec une profondeur de niveau de gris de 16 bits. Dans cette description, le terme d'intensité d'un pixel fait référence à une valeur numérique codant informatiquement la couleur associée à ce pixel, cette couleur étant ici définie par rapport à une palette de niveaux de gris d'une profondeur de 16 bits. Le terme de « gamme d'intensité » désigne les valeurs d'intensité minimum et maximum dans une zone donnée de l'image 12.

Les côtés de l'image 12 s'étendent sensiblement selon des directions horizontale et verticale. Ici, l'image 12 est de forme rectangulaire ; le tissu 14 s'étend sensiblement selon la direction verticale dans l'image 12.

Le tissu biologique 14 contient une pluralité de cellules. Chaque cellule comprend notamment une membrane cellulaire et un cytoplasme. De préférence, les cellules à identifier appartiennent à un même type de cellules. De préférence, ces cellules présentent une forme régulière. Pour faciliter la lecture, les cellules ne sont pas dessinées sur la figure 3 ; seul le contour du tissu 14 y est schématisé.

Typiquement, préalablement à l'étape 10, une substance fluorophore est appliquée sur le tissu 14, afin de permettre un marquage des membranes cellulaires du tissu 14 par immunofluorescence. Ainsi, les membranes cellulaires sont aptes à présenter un état fluorescent lors de l'acquisition de l'image 12, ce qui permet de distinguer ces membranes des autres composants de la cellule lors d'étapes subséquentes du procédé. Dans cet exemple, la substance fluorophore utilisée est un anticorps fluorescent associé à une protéine présente dans les membranes cellulaires du tissu 14.

Dans ce mode de réalisation, le tissu 14 est une tranche d'un muscle tibial antérieur (« *tibialis anterior* » en latin) d'une souris. Les cellules sont donc ici des fibres musculaires, vues en coupe selon un plan transverse à une direction d'allongement des fibres musculaires. Dans cette description, l'image 12 présente une résolution de 0,645µm par pixel. Par la suite, les différentes valeurs numériques sont données pour ce contexte particulier. Dans un autre contexte, les valeurs numériques devront être adaptées. Par exemple, ces valeurs numériques doivent être adaptées pour tenir compte de la résolution de l'image 12, de la nature du tissu 14 ou d'un état pathologique.

Avantageusement, lors d'une étape 20, le contour du tissu 14 est détecté. Cette étape 20 permet de générer une image recadrée 16 du tissu 14 (« cropped image » en langue anglaise). Sur la figure 3, les bords de l'image 16 sont représentés en pointillés autour du tissu 14. Cette image 16 est, par exemple, le plus petit rectangle incluant les pixels de l'image 12 qui constituent le tissu 14. Ici, l'image 16 s'étend en largeur selon la direction horizontale et en hauteur selon la direction verticale. Cette image 16 permet notamment de limiter la mise en oeuvre des étapes subséquentes du procédé à la seule portion de l'image brute 12 qui contient le tissu 14, évitant ainsi de gaspiller des ressources de calcul.

La figure 4 représente plus en détail l'étape 20. Cette étape 20 comprend ici :
- une opération 22 de correction de l'image 4 pour générer une image sans bruit de fond;
- une opération 24 de binarisation de l'image corrigée, pour générer une image binaire ;
- une opération 26 de détection des contours du tissu 14 sur l'image binaire ;
- une opération 28 de génération d'une image recadrée 16 de l'image 12 à partir des contours détectés.

Le bruit de fond est ici considéré comme étant l'échantillonnage des valeurs d'intensité de l'ensemble des pixels de l'image 12 identifiés comme ne faisant pas partie du plus petit rectangle comprenant le tissu 14.

Lors de l'opération 22, le bruit de fond de l'image 12 est éliminé.

Par exemple, à cet effet, l'opération 22 comprend la mise en oeuvre de la méthode connue sous le nom de « rolling bail algorithm » en langue anglaise, décrite par Stanley Sternberg dans l'article intitulé « Biomédical image processing » et publié dans le numéro de janvier 1983 de la revue « IEEE Computer ».

L'opération 24 comprend la mise en oeuvre d'une binarisation de l'image corrigée, avec un seuil d'intensité prédéfini, pour générer l'image binaire. Cette opération 24 facilite la détection du contour du tissu 14. A l'issue de cette opération 24, les pixels formant le tissu 14 ont une même valeur d'intensité connue. Ici, les pixels formant le tissu 14 sont de couleur blanche, et les pixels de cette image n'appartenant pas au tissu 14 sont de couleur noire.

Les termes de « binarisation » et d' « image binaire » ont ici le même sens que, respectivement, les termes de « seuillage » et d'« image seuillée ». Ces termes distincts sont utilisés pour éviter toute confusion avec des opérations d'autres étapes du procédé.

Par exemple, l'opération 24 comprend la mise en oeuvre de la méthode de seuillage dite du triangle pour générer l'image binaire. Cette méthode est décrite par G. W. Zach et al. dans l'article intitulé « Automatic measurement of sister chromatid exchange frequency » et publié en 1977 dans la revue « Journal of Histochemistry and Cytochemistry », volume vingt-cinq, numéro sept, pages sept-cent quarante-et-une à sept-cent quarante-trois.

Puis, lors de l'opération 26, l'image binaire est analysée pour détecter des surfaces formées d'une pluralité de pixels dont l'intensité correspond au tissu 14. Cela permet de détecter le tissu 14 et d'obtenir des coordonnées des pixels formant le contour du tissu 14.

L'opération 26 comprend, par exemple, la mise en oeuvre de la fonction d'analyse de particules (« particle analyzer » en langue anglaise) du logiciel de traitement d'images connu sous le nom « ImageJ ». Le logiciel « ImageJ » désigne ici le logiciel créé par W. S. Rasband et disponible sur le site internet du « U.S. National Institute of Health, Bethesda, Maryland, U.S.A. » à l'adresse « http://image.nih.gov/ij ».

Cette fonction d'analyse est ici configurée pour ne détecter que des surfaces d'une intensité donnée et dont la superficie présente une certaine valeur, choisie en fonction des dimensions des cellules formant le tissu 14. Les cellules du tissu 14 ont une superficie comprise entre des superficies minimale Sₘᵢₙ et maximale Sₘₐₓ. La fonction d'analyse est ici configurée pour ne détecter que des surfaces d'une intensité donnée dont la superficie est supérieure ou égale à M₁*Sₘᵢₙ et inférieure ou égale à M₂*Sₘₐₓ. Ici, M₁ est égal à dix ou douze ou quinze et M₂ est supérieur à cent ou mille.

Dans cet exemple, avec le type de tissu 14 et la résolution de l'image 12, on considère que Sₘᵢₙ, exprimée en nombre de pixels, est supérieure ou égale à 150 pixels, ou 200 pixels. Sₘᵢₙ est inférieure ou égale à 500 pixels ou 400 pixels. De préférence, Sₘᵢₙ est égale à 300 pixels. De même, Sₘₐₓ est supérieure ou égale à 10000 pixels ou 12000 pixels. Sₘₐₓ est inférieure ou égale à 20000 pixels ou 17000 pixels. De préférence, Sₘₐₓ est égale à 15000 pixels.

L'opération 28 est ensuite appliquée sur chacune des surfaces détectées lors de l'opération 26, afin d'affiner la précision de la détection du tissu 14. Cette opération 28 permet de détecter avec précision le contour du tissu 14, tout en limitant le risque de modification indésirable de la forme des cellules du tissu 14. Notamment, cette opération 28 permet de compenser des artefacts graphiques indésirables engendrés par l'opération 24, comme par exemple la coupure de membranes cellulaires du tissu 14.

L'opération 28 comprend ici :
- un premier élargissement des surfaces détectées, d'une valeur E₁ de vingt-cinq pixels dans chaque dimension
- un seuillage de l'image comprenant les surfaces élargies, par exemple suivant la méthode décrite par T. W. Ridler et al. dans l'article intitulé « Picture thresholding using an iterative selection method » et publié en 1978 dans la revue « IEEE Transactions on System, Man and Cybernetics », volume SMC-8, numéro huit, pages six-cent-trente à six-cent trente-deux ;
- la mise en oeuvre de l'opération 26 sur cette image seuillée ;
- un élargissement, d'une valeur E₂ de cinq pixels dans chaque dimension, des surfaces détectées, puis une répétition du seuillage et de la mise en oeuvre de l'opération 26 ;
- la réduction des surfaces détectées d'une valeur égale, à la somme de E₁ et E₂ dans chaque dimension.

Par exemple, dans cette description, un élargissement d'une surface par une quantité de pixels E dans toutes les dimensions est défini de la manière suivante :
- un pixel appartenant au contour périphérique de la surface est choisi comme point de départ ;
- la droite reliant le centre de ce pixel au barycentre de ladite surface est déterminée ;
- une quantité E de pixels supplémentaires est ajoutée à cette surface, ces pixels supplémentaires étant placés le long de ladite droite vers l'extérieur de la surface ;
- les opérations précédentes étant répétées en prenant successivement comme point de départ chacun des pixels appartenant au contour périphérique de ladite surface.

La réduction d'une surface par une quantité de pixels E est définie de la même manière, sauf qu'une quantité E de pixels est supprimée de la surface le long de ladite droite.

A l'issue de cette étape 20, on dispose donc :
- de l'image recadrée 16, et
- d'une image de contour du tissu 14. Cette image de contour est l'image binaire obtenue à l'issue de l'opération 28.

L'image 16 est utilisée pour limiter la mise en oeuvre d'étapes subséquentes du procédé sur la seule portion de l'image brute 12 comprenant le tissu 14.

Lors d'une étape 30, au moins une image seuillée est générée automatiquement à partir de l'image 16. La génération de chaque image seuillée est réalisée de la manière suivante :
- chaque pixel de l'image 16 dont la valeur d'intensité est inférieure à un seuil d'intensité prédéterminé est remplacé par un pixel d'une première valeur d'intensité ;
- chaque pixel de l'image 16 dont la valeur d'intensité est supérieure à ce seuil d'intensité prédéterminé est remplacé par un pixel d'une deuxième valeur d'intensité.

Ici, les première et seconde valeurs d'intensité correspondent respectivement aux couleurs noire et blanche. Dans la représentation binaire choisie, avec une échelle de 16 bits par pixel, la première valeur d'intensité est, par exemple, inférieure à dix. La deuxième valeur d'intensité est, par exemple, supérieure à 65000 et, de préférence, supérieure ou égale à 65500.

La figure 5 représente plus en détail l'étape 30. L'étape 30 comprend :
- une opération 32 de partition de l'image 16 en une pluralité de premières fenêtres d'analyse ;
- une opération 34 de détermination des valeurs d'un premier seuil d'intensité pour chacune de ces premières fenêtres d'analyse ;
- une opération 36 de génération d'une première image seuillée.

Les premières fenêtres d'analyse partitionnent toute la surface du tissu au sein de l'image 16. Ces premières fenêtres sont contiguës les unes aux autres et présentent donc au moins un côté commun. Les dimensions de ces premières fenêtres dépendent notamment de la résolution de l'image 12 et de la disposition du tissu 14 dans l'image 16.

Ici, les premières fenêtres présentent une forme rectangulaire et s'étendent horizontalement sur la largeur du tissu 14 au sein de l'image 16 à cette position verticale. Ces premières fenêtres possèdent une hauteur h₁. La hauteur h₁ est supérieure ou égale à huit pixels ou dix pixels, et inférieure ou égale à vingt pixels ou quinze pixels. Ces premières fenêtres sont disposées de sorte à ce qu'il n'y ait aucun recouvrement, même partiel, entre deux fenêtres d'analyse contiguës. L'image de contour est ici combinée à l'image 16 pour déterminer la largeur de chacune des premières fenêtres, de façon à ce que ces premières fenêtres englobent le moins possible de pixels de l'image ne faisant pas partie du tissu 14. Ainsi, la qualité de la détection des cellules est améliorée. De préférence, la largeur de chaque première fenêtre d'analyse est choisie de sorte à ce que la superficie totale des pixels ne faisant pas partie du tissu 14 et contenus dans cette première fenêtre d'analyse soit inférieure à 10 % ou 5% de la superficie totale de cette première fenêtre d'analyse.

Par exemple, si le tissu 14 comprend un premier et un second morceaux situés, dans la direction horizontale, de part et d'autre d'un trou, alors deux premières fenêtres d'analyse englobant uniquement, respectivement, le premier et le second morceaux de tissu 14 sont définies. Ces deux premières fenêtres sont situées, respectivement, de part et d'autre du trou.

Lors de l'opération 34, la valeur du seuil d'intensité est déterminée, pour chacune des premières fenêtres, à partir des seuls pixels contenus dans cette première fenêtre.

Le seuil d'intensité est déterminé pour correspondre à une valeur d'intensité intermédiaire entre les valeurs d'intensité du cytoplasme et de la membrane dans l'image 16. Le seuil d'intensité est, pour chaque première fenêtre, choisi afin de pouvoir discriminer un pixel du cytoplasme d'un pixel d'une membrane.

Ici, la détermination du seuil d'intensité comprend la mise en oeuvre de la méthode décrite par L-K. Huang et al. dans l'article intitulé « Image thresholding by minimizing the measures of fuzziness » et publié en 1995 dans la revue « Pattern Recognition », volume vingt-huit, numéro un, pages quarante-et-une à cinquante-et-une, ci-après nommée « méthode de Huang ».

Le seuillage est ensuite réalisé individuellement pour chacune des premières fenêtres, en utilisant la valeur du seuil d'intensité déterminée pour cette fenêtre. Ainsi, une opération de seuillage est mise en oeuvre séparément sur chaque partie de l'image 16 recouverte par une première fenêtre d'analyse.

Lors de l'opération 36, la première image seuillée est générée en concaténant les différentes portions d'images seuillées, obtenues lors de l'opération 34.

Une étape 40 est ensuite mise en oeuvre sur cette première image seuillée pour détecter des candidats cellules. Lors de cette étape 40, des surfaces formées chacune d'une pluralité de pixels d'une même valeur d'intensité prédéfinie et contigus les uns aux autres sont automatiquement recherchées dans chaque image seuillée générée lors de l'étape 30. La valeur d'intensité prédéfinie est ici le noir, c'est-à-dire celle qui correspond au cytoplasme. Les surfaces ainsi trouvées constituent un candidat cellule.

La recherche automatique de ces surfaces comprend ici la mise en oeuvre de la fonction de recherche de particules du logiciel « ImageJ » précédemment décrit.

L'analyseur de particules est, ici, configuré pour détecter les surfaces formées de pixels de couleur noire et présentant une superficie comprise entre une borne inférieure et une borne supérieure. Ces bornes inférieure et supérieure sont choisies de sorte à détecter des cytoplasmes pouvant présenter une large distribution de tailles. La borne inférieure est choisie inférieure ou égale à la superficie minimale Sₘᵢₙ. La borne supérieure est choisie au moins égale à cinquante fois ou cent fois la superficie maximale Sₘₐₓ.

A l'issue de cette étape 40, des caractéristiques des candidats cellules sont enregistrées dans une mémoire informatique. Ces caractéristiques comprennent, par exemple, les coordonnées, dans l'image 16, des pixels délimitant chacune des surfaces respectives des candidats cellules.

Par exemple, les candidats cellule identifiés sont enregistrés sur une première image bilan 42, illustrée sur les figures 6A et 6B. Dans l'image bilan 42, les pixels des cytoplasmes sont de couleur blanche ; les pixels des membranes sont de couleur noire. Pour simplifier la figure 6A, seul le contour de l'ensemble des candidats cellules est représenté. Notamment, le détail individuel des candidats cellule identifiés n'est pas illustré.

Avantageusement, lors d'une étape 60, l'image 16 est à nouveau analysée, pour générer une seconde image seuillée. L'étape 60 est exécutée après l'étape 30, ou encore en parallèle de l'étape 30. La figure 7 représente plus en détail cette étape 60. L'étape 60 comprend :
- une opération 62, de partition de l'image 16 en une pluralité de secondes fenêtres d'analyse contiguës ;
- une opération 64, de détermination de la valeur d'un second seuil d'intensité pour chaque seconde fenêtre d'analyse ;
- une opération 66, de génération de la seconde image seuillée.

Ces opérations 62, 64 et 66 sont, par exemple, respectivement identiques aux opérations 32, 34, et 36, sauf que les secondes fenêtres sont distinctes des premières fenêtres. Par exemple, ces secondes fenêtres sont disposées de façon à ce que chaque seconde fenêtre chevauche au moins deux des premières fenêtres de l'opération 32.

Ici, les secondes fenêtres présentent des dimensions supérieures aux premières fenêtres. Ces secondes fenêtres sont disposées de sorte à ce qu'il n'y ait aucun recouvrement, même partiel, entre deux secondes fenêtres contiguës. Les secondes fenêtres s'étendent ici horizontalement sur toute la largeur du tissue au sein de l'image 16 et présentent une hauteur h₂ supérieure ou égale à 50 pixels.

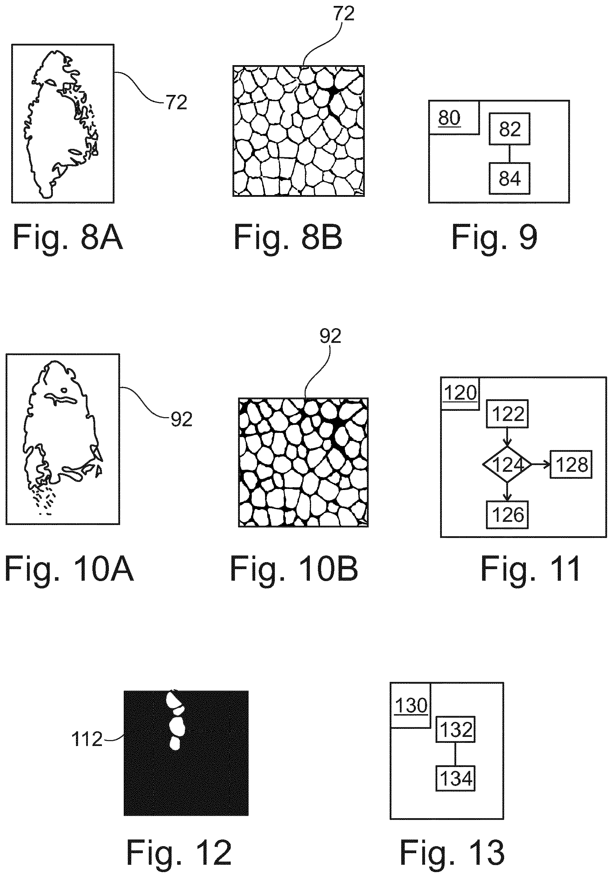

Avantageusement, cette étape 60 est suivie d'une étape 70. Cette étape 70, par exemple identique à l'étape 40, est mise en oeuvre sur la seconde image seuillée pour détecter des candidats cellules supplémentaires. Ces candidats cellules sont enregistrés sur une seconde image bilan 72, illustrée sur les figures 8A et 8B.

Avantageusement, lors d'une étape 80 l'image 16 est à nouveau analysée, pour générer une troisième image seuillée. L'étape 80 est exécutée après ou en parallèle de l'une ou l'autre des étapes 30 ou 60. La figure 9 représente plus en détail cette étape 80. L'étape 80 comprend :
- une opération 82 de détermination d'un seuil d'intensité pour l'image 16 complète ;
- une opération 84 de génération de la troisième image seuillée.

Lors de l'opération 82, un unique seuil d'intensité est défini à partir des pixels de l'image 16 entière. Ce seuil d'intensité ici est défini de la même façon que lors de l'opération 34, sauf qu'ici tous les pixels du tissu et le pourtour situés à l'intérieur de l'image 16 sont pris en compte.

Lors de l'opération 84, la troisième image seuillée est générée à partir du seuil d'intensité défini lors de l'opération 82. Ici, cette opération 84 est identique à l'opération 36, sauf que la valeur du seuil est déterminée à partir de l'image entière.

L'étape 80 est suivie d'une étape 90. L'étape 90 est mise en oeuvre pour détecter des candidats cellules à partir de cette troisième image seuillée. Ces candidats cellules sont enregistrés sur une troisième image bilan 92, illustrée sur les figures 10A et 10B. Cette étape 90 est, par exemple, identique à l'étape 40, sauf que l'analyseur de particules est configuré pour détecter des surfaces présentant des critères morphologiques plus restrictifs que lors de l'étape 40. La borne supérieure de la superficie est donc choisie ici, au plus, égale à Sₘₐₓ, ou 1,5*S_{max,} ou 2*Sₘₐₓ.

Ces étapes 80 et 90 facilitent notamment la détection de candidats cellules situés près des bords du tissu 14 lorsque l'image 16 du tissu 14 présente des variations importantes de gammes d'intensité selon une direction parallèle à la plus grande largeur des premières ou secondes fenêtres d'analyse. Par exemple, la comparaison de l'image 92 (figure 10A) avec les images 42 (figure 6A) ou 72 (figure 8A) illustre que les étapes 80 et 90 facilitent la détection de candidats cellules qui ne sont pas identifiés lors des étapes 30 et 40 ou 60 et 70.

Avantageusement, le procédé comprend une étape 110 (figure 2) d'analyse locale des candidats cellules de l'image bilan 42. L'étape 110 permet d'affiner la détection des candidats cellules, en vérifiant si une surface initialement détectée comme un seul candidat cellule n'est pas, en réalité, un amas de plusieurs surfaces qui pourraient être individuellement considérées comme des candidats cellules distincts. L'identification des cellules du tissu 14 dans l'image 16 est ainsi améliorée. Cette étape 110 comprend, par exemple, pour chaque candidat cellule, la mise en oeuvre :
- d'une opération d'élargissement de 5 pixels ou 6 pixels du candidat cellule ;
- d'une opération de génération d'une image seuillée de ce candidat cellule élargi ;
- d'une opération de détection de nouveaux candidats cellules, au sein du candidat cellule seuillé ;
- d'une opération de génération d'une image résultat comprenant les nouveaux candidats cellules détectés.

L'opération de génération d'une image seuillée est, par exemple, identique aux opérations de seuillage mises en oeuvre pendant l'étape 80, sauf qu'ici le seuil d'intensité est déterminé à partir des seuls pixels du candidat cellule élargi.

Les opérations de détection de nouveaux candidats cellules, au sein du candidat cellule seuillé sont, par exemple, identiques aux opérations de détection de candidats cellules mises en oeuvre pendant l'étape 90.

L'image résultat est générée en ajoutant les nouveaux candidats cellules détectés, ainsi que les candidats cellule analysés dans lequel aucun nouveau candidat cellule n'a été détecté.

La figure 12 représente, à titre d'exemple, une image résultat en cours de génération, sur laquelle est enregistrée une pluralité de nouveaux candidats cellules 112 qui ont été détectés à partir du candidat cellule 114 de l'image 42 (figure 6B) après seuillage de ce candidat cellule 114.

Ici, l'analyse locale des candidats cellule est mise en oeuvre sur les trois images bilan 42, 72 et 92 pour générer une seule image résultat. Pour combiner les trois images bilan 42, 72 et 92, l'étape 110 est d'abord mise en oeuvre sur la première image bilan 42. A chaque fois que l'analyse locale d'un candidat cellule de cette première image bilan 42 conduit à la détection d'un ou plusieurs nouveaux candidats cellules, ces nouveaux candidats cellules détectés sont ajoutés sur l'image résultat. Puis, l'étape 110 est mise en oeuvre sur la seconde image bilan 72, en n'analysant que les candidats cellules de cette image 72 pour lesquels aucun nouveau candidat cellule n'a été détecté à partir de l'image 42. Si un ou des nouveaux candidats cellules sont détectés à partir de l'image 72, ces nouveaux candidats cellules sont ajoutés sur l'image résultat. Puis, l'étape 110 est mise en oeuvre sur la troisième image bilan 92, en n'analysant que les candidats cellules de cette image 92 pour lesquels aucun nouveau candidat cellule n'a été détecté à partir des images 42 et 72. Si un ou des nouveaux candidats cellules sont détectés à partir de l'image 92, ces nouveaux candidats cellules sont ajoutés sur l'image résultat. A l'issue de cette étape, les candidats cellule pour lesquels aucun nouveau candidat cellule n'a été détecté sont ajoutés sur l'image résultat. En combinant les trois images bilan 42, 72 et 92 de cette manière, il n'est pas nécessaire de mettre en oeuvre l'étape 110 sur l'intégralité de chacune des trois images bilan 42, 72 et 92.

Lors d'une étape 120, chacun des candidats cellules contenus dans l'image résultat est sélectivement transformé en une cellule identifiée si une ou plusieurs caractéristiques morphologiques de ce candidat satisfont à des critères morphologiques prédéfinis. Dans le cas contraire, le candidat cellule n'est pas transformé en une cellule identifiée.

Dans cette description, on considère qu'une cellule est identifiée dès que son cytoplasme est identifié.

La figure 11 représente plus en détail l'étape 120. L'étape 120 comprend, pour chaque candidat cellule :
- une opération 122 d'acquisition de caractéristiques morphologiques du candidat cellule ;
- une opération 124 de comparaison des caractéristiques morphologiques acquises avec les critères morphologiques prédéfinis ;
- une opération 126 de transformation du candidat cellule en une cellule identifiée, si les caractéristiques morphologiques acquises satisfont aux critères morphologiques prédéfinis ;
- une opération 128 de rejet du candidat cellule, si au moins une caractéristique morphologique acquise ne satisfait pas au critère morphologique prédéfini correspondant.

Par exemple, l'opération 122 comprend la mesure de la superficie S du candidat cellule. L'opération 124 comprend alors la comparaison de cette superficie S avec les superficies minimale Sₘᵢₙ et maximale Sₘₐₓ..

L'opération 122 comprend également le calcul de la circularité C de chaque candidat cellule. L'opération 124 comprend alors la comparaison de cette circularité C avec des circularités minimale Cₘᵢₙ et maximale Cₘₐₓ. La circularité d'une forme plane de surface S et de périmètre p est, par exemple, définie comme étant la quantité égale à 4*π*S/(p²). Ici, avec la résolution de l'image 12 choisie, Cₘᵢₙ est au moins égale à 0,4 ou 0,3. Cₘₐₓ est au plus égale à 0,9 ou 0,95 ou 1.

Avantageusement, le procédé comprend, après l'étape 120, une étape 130 de correction des cellules identifiées. Cette étape 130 permet d'extrapoler, avec une précision satisfaisante, les coordonnées des membranes cellulaires associées à chacune des cellules identifiées, à partir des coordonnées de leur cytoplasme. Dans cet exemple, le procédé identifie les cellules avec un taux de réussite supérieur ou égal à 90% du taux de réussite affiché par un humain. Par exemple, ce taux de réussite est égal à 94%.

La figure 13 représente plus en détail l'étape 130. Cette étape 130 comprend, pour chaque cellule identifiée :
- une opération 132 de calcul d'un coefficient de correction ;
- une opération 134 d'élargissement de la surface du cytoplasme de la cellule identifiée d'une quantité de pixels dépendante du coefficient de correction calculé.

Le coefficient de correction dépend notamment de la superficie S du cytoplasme de la cellule identifiée. Ici, avec la résolution de l'image 12 choisie, ce coefficient est égal :
- à 4 pixels, si S est inférieure à 1000 pixels ;
- à 3,75 pixels si S est supérieure ou égale à 1400 pixels ;
- à la quantité 4*(1000-S)/[4*(1400-1000)] si S est supérieure ou égale à 1000 pixels et inférieure à 1400 pixels.

Dans cet exemple, lors de l'opération 134, chaque superficie de cytoplasme de cellule est élargie d'une quantité égale au coefficient de correction calculé, pour cette cellule, lors de l'opération 132.

Ainsi, à l'issue du procédé, on dispose, en plus des coordonnées des cytoplasmes des cellules identifiées dans l'image 16, des coordonnées des membranes cellulaires correspondant à ces cytoplasmes.

Avantageusement, lors d'une étape 140, les cellules identifiées sont automatiquement dénombrées. Ici, cette étape 140 comprend la génération automatique d'un rapport comprenant des caractéristiques des cellules identifiées, telles que leur nombre ou leurs coordonnées dans l'image 16. Ce rapport est, par exemple, un tableau contenant des valeurs numériques correspondant auxdites caractéristiques.

De nombreux autres modes de réalisation sont possibles.

En variante, une ou plusieurs des étapes 20, 60 et 70, 80 et 90, 110, 130, ou 140 sont omises. Dans le cas où l'étape 20 est omise, l'image brute 12 est utilisée à la place de l'image recadrée 16 lors des étapes suivantes du procédé.

Les fenêtres d'analyse peuvent présenter une forme autre que rectangulaire. Par exemple, ces fenêtres sont de forme carrée. En variante, les fenêtres présentent une forme non régulière, par exemple, une forme polygonale ou elliptique. La forme de ces fenêtres peut également être adaptée par un utilisateur, par exemple, lorsque le tissu 14 de l'image 12 n'est pas d'un seul tenant, comme lorsque le tissu 14 se présente sous la forme de plusieurs morceaux disjoints.

En variante, le tissu 14 présente une orientation quelconque dans l'image 12.

Le tissu 14 n'est pas forcément centré dans l'image 12 ; par exemple, le tissu 14 est tronqué par un bord de l'image 12.

Au cours d'une même opération de partition de l'image 12 deux fenêtres d'analyse immédiatement voisines au sein d'une même image peuvent présenter entre elles un recouvrement non-nul.

Ces fenêtres d'analyse peuvent également présenter des tailles différentes. En variante, leur taille est adaptée en fonction de variations locales de gammes d'intensité de l'image.

Lors des étapes 40 et 60, l'analyseur de particules peut également être configuré pour détecter des surfaces présentant, en plus des critères précédemment décrits, un critère additionnel portant sur la valeur de la circularité de la surface. Cela permet de durcir les conditions de détection des candidats cellules. Par exemple, l'analyseur ne détecte que des surfaces dont la circularité est comprise entre 0,2 et 0,9.

En variante, les opérations de seuillage d'une image sont remplacées par des opérations de segmentation de cette image. La prédétermination d'une valeur de seuil pour une image est ainsi remplacée par la détermination d'une pluralité de valeurs de seuils pour cette image. Par exemple, en variante, lors de l'opération 34, des première et seconde valeurs de seuils sont définis, de telle sorte que, lors de l'opération 36 :
- chaque pixel de l'image 16, dont la valeur d'intensité est inférieure à ces première et seconde valeurs de seuils, est remplacé par un pixel d'une première valeur d'intensité ;
- chaque pixel de l'image 16, dont la valeur d'intensité est supérieure à ces première et seconde valeurs de seuils, est remplacé par un pixel d'une deuxième valeur d'intensité ;
- chaque pixel de l'image 16, dont la valeur d'intensité est comprise entre ces première et seconde valeurs de seuils, est remplacé par un pixel d'une troisième valeur d'intensité intermédiaires, par exemple afin de marquer une zone de l'image devant être réanalysée ultérieurement lors d'étapes supplémentaires du procédé.

En variante, les cellules à identifier ne sont pas des cellules de muscle. Par exemple, le tissu 14 est une coupe transverse d'un nerf ; les cellules à identifier sont alors des coupes d'axones de cellules nerveuses.

Les valeurs des paramètres numériques utilisés, telles que les valeurs de Sₘᵢₙ et Sₘₐₓ, ou encore les dimensions des première et seconde fenêtres d'analyse, peuvent être différentes et dépendre de paramètres tels que le type de cellule contenue dans le tissu 14, un état pathologique des cellules, l'espèce d'origine du tissu, ou encore la résolution graphique de l'image 12. La résolution graphique de l'image 12 peut elle-même dépendre de conditions d'acquisition de l'image 12, telles que des propriétés optiques ou des paramètres optiques du dispositif ayant servi à acquérir l'image 12. Si la résolution de l'image 12 est différente de celle de l'exemple décrit, les valeurs des paramètres numériques peuvent être simplement redéfinies lors d'une étape de calibration. Par exemple, ces valeurs peuvent être redéfinies par proportionnalité avec la résolution de l'image. L'utilisation de substance fluorophore peut être remplacée par l'emploi d'une protéine lectine fluorescente apte à être incorporée dans les membranes cellulaires.

En variante, préalablement à l'étape 10, un marqueur biologique fluorescent, tel que la protéine fluorescente verte GFP (« green fluorescent protein » en langue anglaise), est injecté dans le tissu 14 pour détecter des cellules du tissu 14 ayant reçu un traitement génétique spécifique préalable. Ainsi, le procédé peut être utilisé pour identifier, parmi les cellules du tissu 14, une sous-population particulière de cellules. Par exemple, ce procédé peut être utilisé pour différencier deux types de fibres musculaires. Ce marqueur est distinct de la substance fluorophore injectée pour le marquage des membranes. Ce marqueur fluorescent GFP peut être remplacé par un autre marqueur fluorescent qui n'interfère pas avec le marquage des membranes.

En variante, l'image 12 est encodée en niveaux de gris avec une profondeur de couleurs différente de 16 bits, par exemple, avec une profondeur de valeurs supérieure à 16 bits ou égale à 8 bits.

En variante, l'image 12 est enregistrée dans un format informatique différent.

L'image 12 du tissu biologique peut être en couleur. Dans ce cas, l'image utilisée par le procédé est l'image numérique encodée par les seuls pixels de l'une des composantes chromatiques de l'image fournie. Ces composantes chromatiques sont, par exemple, les trois couleurs primaires définies dans un modèle colorimétrique à synthèse additive, correspondant par exemple à l'espace colorimétrique « sRGB » connu de l'homme du métier. Par exemple, l'image fournie est une image en couleur de 48 bits, comprenant trois composantes chromatiques de 16 bits chacune. Lorsqu'une substance photophore ou un marqueur fluorescent est utilisé pour marquer une zone d'intérêt du tissu 14, alors le procédé pourra être appliqué préférentiellement à la composante chromatique de l'image correspondant à la couleur de la substance photophore ou du marqueur fluorescent. Par exemple, l'image utilisée par le procédé est la composante « rouge » de l'image 12.

La circularité peut être définie différemment. Par exemple, la circularité d'une forme plane peut être définie comme étant une quantité proportionnelle au rapport entre des rayons d'un premier et d'un second cercles concentriques coplanaires, ces deux cercles étant disposés tels que :
- le premier cercle est le cercle inscrit à la forme plane qui présente la plus grande circonférence ;
- le second cercle est le cercle circonscrit à la forme plane qui présente la plus petite circonférence.

## Revendications

1. Procédé d'identification de cellules dans un tissu biologique, chaque cellule incluant un cytoplasme délimité par une membrane cellulaire, ce procédé comprenant :
une étape préalable de marquage des membranes cellulaires à l'aide d'un marqueur fluorescent ou d'une substance photophore,
a) l'acquisition (10) d'une image numérique brute d'une coupe du tissu biologique contenant les cellules à identifier, cette image brute comprenant une pluralité de pixels de valeurs d'intensités différentes ;
b) la génération automatique (30, 60, 80) d'au moins une image seuillée en remplaçant, d'une part, chaque pixel de l'image brute dont la valeur d'intensité est inférieure à un seuil d'intensité prédéterminé, par un pixel d'une première valeur d'intensité et, d'autre part, chaque pixel dont la valeur d'intensité est supérieure à ce seuil prédéterminé, par un pixel d'une deuxième valeur d'intensité, le seuil d'intensité étant prédéterminé pour correspondre à une valeur d'intensité intermédiaire entre les valeurs d'intensités du cytoplasme et de la membrane dans l'image brute ;
c) la recherche automatique (40, 70, 90), dans l'image seuillée, de surfaces formées chacune d'une pluralité de pixels contigus et d'une même valeur d'intensité prédéfinie, chaque surface ainsi trouvée constituant un candidat cellule ;
d) la transformation sélective (120) d'un candidat cellule en une cellule identifiée, lorsque une ou plusieurs caractéristiques morphologiques de ce candidat satisfont à des critères morphologiques prédéfinis et, dans le cas contraire, la non-transformation du candidat cellule en une cellule identifiée ;
la valeur d'intensité prédéfinie étant celle, parmi les première et deuxième valeurs d'intensités, qui correspond au cytoplasme.

2. Procédé d'identification selon la revendication 1, dans lequel l'étape d) comprend, pour chaque candidat cellule :
- l'acquisition (122) de caractéristiques morphologiques du candidat cellule, incluant :
• la mesure de la superficie de la surface constituant le candidat cellule ;
• le calcul de la circularité du candidat cellule ;
- la comparaison (124) des caractéristiques morphologiques acquises avec les critères morphologiques prédéfinis et, si lesdits critères sont satisfaits, la transformation (126) du candidat cellule en une cellule identifiée et, dans le cas contraire, la non-transformation (128) du candidat cellule en une cellule identifiée.

3. Procédé d'identification selon les revendications 1 ou 2, dans lequel la génération automatique b) d'une image seuillée comprend :
- la partition de l'image brute en une pluralité de fenêtres d'analyse ;
- pour chaque fenêtre d'analyse, la détermination, à partir des valeurs d'intensités des seuls pixels contenus dans cette fenêtre d'analyse, d'un seuil d'intensité permettant de discriminer un pixel du cytoplasme d'un pixel de la membrane ;
la génération automatique de l'image seuillée ayant lieu séparément pour chaque partie de l'image brute comprise dans chaque fenêtre d'analyse, en utilisant le seuil d'intensité respectivement déterminé pour chaque première fenêtre d'analyse.

4. Procédé d'identification selon la revendication 3, dans lequel le procédé comporte :
- une première mise en oeuvre de l'étape b) pour générer une première image seuillée en utilisant des premières fenêtres d'analyses ;
- une seconde mise en oeuvre de l'étape b) pour générer une seconde image seuillée, en utilisant des secondes fenêtres d'analyse, chacune de ces secondes fenêtres étant disposée de sorte à chevaucher deux premières fenêtres d'analyse contiguës ;
- la mise en oeuvre de l'étape c) sur les première et seconde images seuillées.

5. Procédé d'identification selon les revendications 3 ou 4, dans lequel le procédé comprend :
- la détection d'un contour (20) du tissu biologique dans l'image numérique brute, ce contour délimitant l'ensemble des pixels constituant des portions de l'image numérique brute dans laquelle figure le tissu biologique ;
- la mise en oeuvre de l'étape b) pour générer une troisième image seuillée, un unique et même seuil d'intensité étant déterminé pour la totalité de l'image brute à partir des valeurs d'intensités des seuls pixels contenus dans l'image brute et situés à l'intérieur du contour détecté ;
- la mise en oeuvre de l'étape c) sur cette troisième image seuillée.

6. Procédé d'identification selon l'une quelconque des revendications précédentes, dans lequel l'étape d) comprend en outre, pour chacun des candidats cellules :
- une opération d'élargissement du candidat cellule selon un ou plusieurs paramètres prédéfinis ;
- la mise en oeuvre de l'étape b) pour générer une quatrième image seuillée du candidat cellule, un unique seuil d'intensité étant déterminé pour la totalité du candidat cellule à partir des valeurs d'intensités des seuls pixels de l'image brute qui sont situés à l'intérieur du candidat cellule après avoir subi l'élargissement ;
- la mise en oeuvre de l'étape c) sur la quatrième image seuillée du candidat cellule et, lorsque de nouveaux candidats cellules sont identifiés à l'intérieur de ce candidat cellule, le remplacement dudit candidat cellule par les nouveaux candidats cellules situées à l'intérieur du précédent candidat cellule.

7. Procédé d'identification selon l'une quelconque des revendications précédentes, dans lequel le procédé comprend la génération (130) d'un ensemble de cellules corrigées, à partir des cellules identifiées, cette génération comportant, pour chaque cellule identifiée :
- le calcul d'un coefficient de correction (132) dépendant de la superficie de la cellule identifiée ;
- l'application d'une opération d'élargissement (134) de la cellule identifiée dans toutes les dimensions, en fonction du coefficient de correction calculé.

8. Procédé de recensement de cellules dans un tissu biologique, comprenant :
- l'identification de chaque cellule du tissu biologique ;
- le dénombrement automatique (140) des cellules identifiées ;
**caractérisé en ce que** l'identification de chaque cellule est réalisée à l'aide d'un procédé conforme à l'une quelconque des revendications précédentes.

9. Support d'enregistrement (6) d'informations, **caractérisé en ce qu'**il comporte des instructions pour l'exécution d'un procédé conforme à l'une quelconque des revendications précédentes lorsque ces instructions sont exécutées par un calculateur électronique.

10. Calculateur électronique (4) pour la mise en oeuvre d'un procédé conforme à l'une quelconque des revendications 1 à 8, ce calculateur électronique étant programmé pour :
- acquérir une image numérique (12) brute d'une coupe du tissu biologique (14) contenant les cellules à identifier, cette image brute comprenant une pluralité de pixels de valeurs d'intensités différentes ;
- générer automatiquement au moins une image seuillée en remplaçant, d'une part, chaque pixel de l'image brute dont la valeur d'intensité est inférieure à un seuil d'intensité prédéterminé, par un pixel d'une première valeur d'intensité et, d'autre part, chaque pixel dont la valeur d'intensité est supérieure à ce seuil prédéterminé, par un pixel d'une deuxième valeur d'intensité, le seuil d'intensité étant prédéterminé pour correspondre à une valeur d'intensité intermédiaire entre les valeurs d'intensités du cytoplasme et de la membrane dans l'image brute ;
- rechercher automatiquement, dans l'image seuillée, des surfaces formées chacune d'une pluralité de pixels contigus et d'une même valeur d'intensité prédéfinie, chaque surface ainsi trouvée constituant un candidat cellule ;
- transformer sélectivement un candidat cellule en une cellule identifiée, lorsque une ou plusieurs caractéristiques morphologiques de ce candidat satisfont à des critères morphologiques prédéfinis et, dans le cas contraire, la non-transformation du candidat cellule en une cellule identifiée ;
la valeur d'intensité prédéfinie étant celle, parmi les première et deuxième valeurs d'intensités, qui correspond au cytoplasme.

11. Procédé d'identification selon l'une quelconque des revendications 1 à 8, dans lequel le marquage fluorescent des membranes cellulaires est effectué :
- par application d'une substance fluorophore sur le tissu biologique afin de permettre un marquage des membranes cellulaires du tissu par immunofluorescence, ou
- par l'emploi d'une protéine lectine fluorescente apte à être incorporée dans les membranes cellulaires.

## Patentansprüche

1. Verfahren zur Identifizierung von Zellen in einem biologischen Gewebe, wobei jede Zelle ein Zytoplasma enthält, das von einer Zellmembran begrenzt ist, wobei dieses Verfahren Folgendes umfasst:
einen vorausgehenden Schritt zum Markieren der Zellmembranen mithilfe eines Fluoreszenzmarkers oder eines Photophors,
a) das Erfassen (10) eines digitalen Rohbilds eines Schnitts des biologischen Gewebes, das die zu identifizierenden Zellen enthält, wobei dieses Rohbild mehrere Pixel mit verschiedenen Intensitätswerten umfasst;
b) das automatische Erzeugen (30, 60, 80) mindestens eines Schwellenwertbildes, indem einerseits jedes Pixel des Rohbilds, dessen Intensitätswert kleiner ist als ein vorbestimmter Intensitätsschwellenwert, durch ein Pixel mit einem ersten Intensitätswert, und andererseits jedes Pixel, dessen Intensitätswert größer ist als dieser vorbestimmte Schwellenwert, mit einem Pixel eines zweiten Intensitätswerts ersetzt wird, wobei der Intensitätsschwellenwert so vorbestimmt ist, dass er einem Intensitätswert entspricht, der zwischen den Intensitätswerten des Zytoplasmas und der Membran in dem Rohbild liegt;
c) das automatische Suchen (40, 70, 90) in dem Schwellenwertbild von Oberflächen, die jeweils aus mehreren benachbarten Pixel gebildet sind und einen gleichen vordefinierten Intensitätswert aufweisen, wobei jede auf diese Art gefundene Oberfläche eine Kandidatenzelle darstellt;
d) das selektive Transformieren (120) einer Kandidatenzelle in eine identifizierte Zelle, wenn eine oder mehrere morphologische Merkmale dieses Kandidaten vordefinierte morphologische Kriterien erfüllen, und wenn dies nicht der Fall ist, das Nichttransformieren der Kandidatenzelle in eine identifizierte Zelle;
wobei der vordefinierte Intensitätswert derjenige aus den ersten und zweiten Intensitätswerten ist, der dem Zytoplasma entspricht.

2. Verfahren zur Identifizierung nach Anspruch 1, wobei Schritt d) für jede Kandidatenzelle Folgendes umfasst:
- das Erfassen (122) von morphologischen Merkmalen der Kandidatenzelle, einschließlich:
• dem Messen der Fläche der Oberfläche, die die Kandidatenzelle darstellt;
• den Berechnen der Zirkularität der Kandidatenzelle;
- das Vergleichen (124) der erfassten morphologischen Merkmale mit den vordefinierten morphologischen Kriterien und, wenn die Kriterien erfüllt sind, die Transformation (126) der Kandidatenzelle in eine identifizierte Zelle, wenn dies nicht der Fall ist, das Nicht-Transformieren (128) der Kandidatenzelle in eine identifizierte Zelle.

3. Verfahren zur Identifizierung nach den Ansprüchen 1 oder 2, wobei das automatische Erzeugen b) eines Schwellenwertbilds Folgendes umfasst:
- das Aufteilen des Rohbilds in mehrere Analysefenster;
- für jedes Analysefenster, das Bestimmen, aus Intensitätswerten nur der Pixel, die in diesem Analysefenster enthalten sind, eines Intensitätsschwellenwerts, der es ermöglicht, ein Pixel des Zytoplasmas von einem Pixel der Membran zu unterscheiden;
wobei das automatische Erzeugen des Schwellenwertbilds für den Teil des Rohbilds, der in jedem Analysefenster umfasst ist, getrennt stattfindet, indem der Intensitätsschwellenwert verwendet wird, der jeweils für jedes erste Analysefenster bestimmt ist.

4. Verfahren zur Identifizierung nach Anspruch 3, wobei das Verfahren Folgendes beinhaltet:
- ein erstes Durchführen von Schritt b), um ein erstes Schwellenwertbild unter Verwendung der ersten Analysefenster zu erzeugen;
- ein zweites Durchführen von Schritt b), um ein zweites Schwellenwertbild unter Verwendung der zweiten Analysefenster zu erzeugen, wobei jedes dieser zweiten Fenster derart angeordnet ist, dass sie zwei benachbarte erste Analysefenster überlappen;
- das Durchführen von Schritt c) an den ersten und zweiten Schwellenwertbildern.

5. Verfahren zur Identifizierung nach Anspruch 3 oder 4, wobei das Verfahren Folgendes umfasst:
- das Detektieren einer Kontur (20) des biologischen Gewebes in dem digitalen Rohbild, wobei diese Kontur die Gesamtheit der Pixel begrenzt, die Abschnitte des digitalen Rohbilds bilden, in dem das biologische Gewebe abgebildet ist;
- das Durchführen von Schritt b), um ein drittes Schwellenwertbild zu erzeugen, wobei ein einziger und gleicher Intensitätsschwellenwert für das gesamte Rohbild aus Intensitätswerten nur der Pixel bestimmt wird, die in dem Rohbild enthalten sind und innerhalb der detektierten Kontur liegen;
- das Durchführen von Schritt c) an diesem dritten Schwellenwertbild.

6. Verfahren zur Identifizierung nach einem der vorhergehenden Ansprüche, wobei Schritt d) ferner für jede der Kandidatenzellen Folgendes umfasst:
- einen Arbeitsgang zur Vergrößerung der Kandidatenzelle gemäß einem oder mehreren vordefinierten Parametern;
- das Durchführen von Schritt b), um ein viertes Schwellenwertbild der Kandidatenzelle zu erzeugen, wobei ein einziger Identitätsschwellenwert für die gesamte Kandidatenzelle aus Intensitätswerten nur der Pixel des Rohbilds bestimmt wird, die innerhalb der Kandidatenzelle liegen, nachdem sie vergrößert wurden;
- das Durchführen von Schritt c) an dem vierten Schwellenwertbild der Kandidatenzelle und, wenn neue Kandidatenzellen innerhalb dieser Kandidatenzelle identifiziert werden, das Ersetzen der Kandidatenzelle mit den neuen Kandidatenzellen, die innerhalb der vorhergehenden Kandidatenzelle liegen.

7. Verfahren zur Identifizierung nach einem der vorhergehenden Ansprüche, wobei das Verfahren das Erzeugen (130) einer Gesamtheit von korrigierten Zellen aus identifizierten Zellen umfasst, wobei diese Erzeugung für jede identifizierte Zelle Folgendes beinhaltet:
- das Berechnen eines Korrekturkoeffizienten (132), der von der Fläche der identifizierten Zelle abhängt;
- das Ausführen eines Arbeitsgangs zur Vergrößerung (134) der identifizierten Zellen in allen Dimensionen in Abhängigkeit vom berechneten Korrekturkoeffizienten.

8. Verfahren zur Zählung von Zellen in einem biologischen Gewebe, das Folgendes umfasst:
- das Identifizieren jeder Zelle des biologischen Gewebes;
- das automatische Auszählen (140) der identifizierten Zellen;
**dadurch gekennzeichnet, dass** das Identifizieren jeder Zelle mithilfe eines Verfahrens nach einem der vorhergehenden Ansprüche ausgeführt wird.

9. Medium zur Aufzeichnung (6) von Informationen, **dadurch gekennzeichnet, dass** es Anweisungen für die Ausführung eines Verfahrens nach einem der vorhergehenden Ansprüche beinhaltet, wenn diese Anweisungen von einem elektronischen Rechner ausgeführt werden.

10. Elektronischer Rechner (4) zur Durchführung eines Verfahrens nach einem der Ansprüche 1 bis 8, wobei dieser elektronische Rechner programmiert ist, um:
- ein digitales Rohbild (12) eines Schnitts des biologischen Gewebes (14) zu erfassen, das die zu identifizierenden Zellen enthält, wobei dieses Rohbild mehrere Pixel mit verschiedenen Intensitätswerten umfasst;
- mindestens ein Schwellenwertbild automatisch zu erzeugen, indem einerseits jedes Pixel des Rohbilds, dessen Intensitätswert kleiner ist als ein vorbestimmter Intensitätsschwellenwert, durch ein Pixel mit einem ersten Intensitätswert, und andererseits jedes Pixel, dessen Intensitätswert größer ist als dieser vorbestimmte Schwellenwert, mit einem Pixel eines zweiten Intensitätswerts ersetzt wird, wobei der Intensitätsschwellenwert so vorbestimmt ist, dass er einem Intensitätswert entspricht, der zwischen den Intensitätswerten des Zytoplasmas und der Membran in dem Rohbild liegt;
- in dem Schwellenwertbild Oberflächen automatisch zu suchen, die jeweils aus mehreren benachbarten Pixel gebildet sind und einen gleichen vordefinierten Intensitätswert aufweisen, wobei jede auf diese Art gefundene Oberfläche eine Kandidatenzelle darstellt;
- eine Kandidatenzelle selektiv in eine identifizierte Zelle zu transformieren, wenn eine oder mehrere morphologische Merkmale dieses Kandidaten vordefinierte morphologische Kriterien erfüllen, und wenn dies nicht der Fall ist, die Kandidatenzelle nicht in eine identifizierte Zelle zu transformieren;
wobei der vordefinierte Intensitätswert derjenige aus den ersten und zweiten Intensitätswerten ist, der dem Zytoplasma entspricht.

11. Verfahren zur Identifizierung nach einem der Ansprüche 1 bis 8, wobei die Fluoreszenzmarkierung der Zellmembranen durchgeführt wird:
- durch Aufbringen eines Fluorophors auf das biologische Gewebe, um eine Markierung der Zellmembranen des Gewebes mittels Immunfluoreszenz zu ermöglichen, oder
- durch die Verwendung eines fluoreszierenden Lectinproteins, das geeignet ist, in die Zellmembranen integriert zu werden.

## Claims

1. Method for identifying cells in a biological tissue, each cell including a cytoplasm delimited by a cellular membrane, this method comprising:
a preliminary step of marking the cellular membranes using a fluorescent marker or a photophore substance,
a) the acquisition (10) of a raw digital image of a cross section of the biological tissue containing the cells to be identified, this raw image comprising a plurality of pixels of different intensity values;
b) the automatic generation (30, 60, 80) of at least one thresholded image by replacing, on the one hand, each pixel of the raw image whose intensity value is lower than a predetermined intensity threshold, by a pixel of a first intensity value and, on the other hand, each pixel whose intensity value is higher than this predetermined threshold, by a pixel of a second intensity value, the intensity threshold being predetermined to correspond to an intermediate intensity value between the intensity values of the cytoplasm and of the membrane in the raw image;
c) the automatic search (40, 70, 90), in the thresholded image, of surfaces each formed by a plurality of contiguous pixels and of a same predefined intensity value, each surface thus found constituting a candidate cell;
d) the selective transformation (120) of a candidate cell into an identified cell, when one or more morphological characteristics of this candidate satisfy predefined morphological criteria and, otherwise, the non-transformation of the candidate cell into an identified cell;
the predefined intensity value being that, out of the first and second intensity values, which corresponds to the cytoplasm.

2. Identification method according to Claim 1, in which the step d) comprises, for each candidate cell:
- the acquisition (122) of morphological characteristics of the candidate cell, including:
• the measurement of the surface area of the surface constituting the candidate cell;
• the computation of the circularity of the candidate cell;
- the comparison (124) of the morphological characteristics acquired with the predefined morphological criteria and, if said criteria are satisfied, the transformation (126) of the candidate cell into an identified cell and, otherwise, the non-transformation (128) of the candidate cell into an identified cell.

3. Identification method according to Claims 1 or 2, in which the automatic generation b) of a thresholded image comprises:
- the partitioning of the raw image into a plurality of analysis windows;
- for each analysis window, the determination, from the intensity values of only the pixels contained in this analysis window, of an intensity threshold making it possible to discriminate a pixel of the cytoplasm from a pixel of the membrane;
the automatic generation of the thresholded image taking place separately for each part of the raw image contained in each analysis window, by using the intensity threshold respectively determined for each first analysis window.

4. Identification method according to Claim 3, in which the method comprises:
- a first implementation of the step b) to generate a first thresholded image by using first analysis windows;
- a second implementation of the step b) to generate a second thresholded image, by using second analysis windows, each of these second windows being arranged so as to overlap two contiguous first analysis windows;
- the implementation of the step c) on the first and second thresholded images.

5. Identification method according to Claims 3 or 4, in which the method comprises:
- the detection of an outline (20) of the biological tissue in the raw digital image, this outline delimiting all of the pixels constituting portions of the raw digital image including the biological tissue;
- the implementation of the step b) to generate a third thresholded image, one and the same intensity threshold being determined for all of the raw image from the intensity values of only the pixels contained in the raw image and situated within the detected outline;
- the implementation of the step c) on this third thresholded image.

6. Identification method according to any one of the preceding claims, in which the step d) further comprises, for each of the candidate cells:
- an operation of widening of the candidate cell according to one or more predefined parameters;
- the implementation of the step b) to generate a fourth thresholded image of the candidate cell, a single intensity threshold being determined for all of the candidate cell from the intensity values of only the pixels of the raw image which are situated within the candidate cell after having undergone the widening;
- the implementation of the step c) on the fourth thresholded image of the candidate cell and, when the new candidate cells are identified in this candidate cell, the replacement of said candidate cell by the new candidate cells situated in the preceding candidate cell.

7. Identification method according to any one of the preceding claims, in which the method comprises the generation (130) of a set of corrected cells, from the identified cells, this generation comprising, for each identified cell:
- the computation of a correction coefficient (132) dependent on the surface area of the identified cell;
- the application of an operation of widening (134) of the identified cell in all the dimensions, as a function of the computed correction coefficient.

8. Method for counting cells in a biological tissue, comprising:
- the identification of each cell of the biological tissue;
- the automatic physical counting (140) of the identified cells;
**characterized in that** the identification of each cell is performed using a method according to any one of the preceding claims.

9. Information storage medium (6), **characterized in that** it comprises instructions for the execution of a method according to any one of the preceding claims when these instructions are executed by an electronic computer.

10. Electronic computer (4) for implementing a method according to any one of Claims 1 to 8, this electronic computer being programmed to:
- acquire a raw digital image (12) of a cross section of the biological tissue (14) containing the cells to be identified, this raw image comprising a plurality of pixels of different intensity values;
- automatically generate at least one thresholded image by replacing, on the one hand, each pixel of the raw image whose intensity value is lower than a predetermined intensity threshold, by a pixel of a first intensity value and, on the other hand, each pixel whose intensity value is higher than this predetermined threshold, by a pixel of a second intensity value, the intensity threshold being predetermined to correspond to an intermediate intensity value between the intensity values of the cytoplasm and of the membrane in the raw image;
- automatically search, in the thresholded image for surfaces each formed by a plurality of contiguous pixels and of one and the same predefined intensity value, each surface thus found constituting a candidate cell;
- selectively transform a candidate cell into an identified cell, when one or more morphological characteristics of this candidate satisfy predefined morphological criteria and, otherwise, the non-transformation of the candidate cell into an identified cell;
the predefined intensity value being that, out of the first and second intensity values, which corresponds to the cytoplasm.

11. Identification method according to any one of Claims 1 to 8, in which the fluorescent marking of the cellular membranes is performed:
- by application of a fluorophore substance on the biological tissue in order to allow a marking of the cellular membranes of the tissue by immunofluorescence, or
- by the use of a fluorescent lectin protein capable of being incorporated in the cellular membranes.
